# EUROPEAN PATENT APPLICATION

(11) **EP 2 578 366 A2**
(43) Date of publication of application: **10.04.2013**
(21) Application number: 12186974.7
(22) Date of filing: 02.10.2012
(51) Int. Cl.: B25J 9/16

(54) **Robot apparatus, robot system, and method for producing a to-be-processed material**

(30) Priority: 04.10.2011 JP 2011220109
(71) Applicant: Kabushiki Kaisha Yaskawa Denki, Kitakyushu-Shi Fukuoka 806 (JP)
(72) Inventor: Irie, Toshimitsu, Kitakyushu-shi, Fukuoka 806-0004 (JP); Murai, Shinji, Kitakyushu-shi, Fukuoka 806-0004 (JP); Kamachi, Hirotoshi, Kitakyushu-shi, Fukuoka 806-0004 (JP)
(74) Representative: Viering, Jentschura & Partner

(57) **Abstract**

A robot apparatus (1) includes a robot arm (11) and a held-state detector (3). The robot arm (11) includes a first holder (15) configured to hold a to-be-held object (201). The held-state detector (3) is coupled to the robot arm (11) and is configured to detect a held state of the to-be-held object (201) held by the first holder (15) while the robot arm (11) is transferring the to-be-held object (201).

## Description

### BACKGROUND OF THE INVENTION

### FIELD OF THE INVENTION

The present invention relates to a robot apparatus, a robot system, and a method for producing a to-be-processed material.

### DISCUSSION OF THE BACKGROUND

As conventionally known, some robot apparatuses include robot arms provided with holders to hold to-be-held objects (see, for example, Japanese Unexamined Patent Application Publication No. 2011-115930).

Japanese Unexamined Patent Application Publication No. 2011-115930 discloses a robot apparatus including a robot arm and a sensor unit. The robot arm includes a gripper (holder) to hold a workpiece (to-be-held object). The sensor unit picks up an image of (photographs) a plurality of workpieces disposed in a stocker. In the robot apparatus recited in Japanese Unexamined Patent Application Publication No. 2011-115930, the sensor unit is fixed at a position above the stocker and apart from the robot arm. Then, the sensor unit picks up an image of the plurality of workpieces disposed in the stocker so as to detect the posture of each of the plurality of workpieces. Then, the robot arm is driven to have the gripper grip one workpiece among the plurality of workpieces. Japanese Unexamined Patent Application Publication No. 2011-115930 does not explicitly recite how to detect states in which the gripper is gripping the workpiece (such as which portion of the workpiece the gripper is gripping). Presumably, though, the sensor unit to pick up an image of the plurality of workpieces disposed in the stocker picks up an image of the workpiece gripped by the gripper, thereby detecting a gripped state (held state) of the workpiece.

The contents of Japanese Unexamined Patent Application Publication No. 2011-115930 are incorporated herein by reference in their entirety.

Unfortunately, when the robot apparatus recited in Japanese Unexamined Patent Application Publication No. 2011-115930 detects a gripped state of the workpiece gripped by the gripper, it is necessary to drive the robot arm to move the gripper gripping the workpiece to adjacent the sensor unit, and then to deactivate the robot arm so as to have the sensor unit pick up an image of the workpiece gripped by the gripper. Thus, the robot arm is deactivated while the sensor unit is picking up an image of the workpiece. This elongates the time (tact time) for the process of a series of operations associated with picking the workpiece (for example, from gripping the workpiece by the gripper to forwarding the workpiece to the machine in charge of the next process). Thus, there is a need for a shortened time period for the process of picking a workpiece (the process of picking a to-be-held object).

The present invention has been made in view of the above-described circumstances, and it is one object of the present invention to provide a robot apparatus, a robot system, and a method for producing a to-be-processed material that ensure a shortened time period for the process of picking a to-be-held object.

### SUMMARY OF THE INVENTION

According to one aspect of the present invention, a robot apparatus includes a robot arm and a held-state detector. The robot arm includes a first holder configured to hold a to-be-held object. The held-state detector is coupled to the robot arm and is configured to detect a held state of the to-be-held object held by the first holder while the robot arm is transferring the to-be-held object.

The robot apparatus according to this one aspect of the present invention includes a held-state detector coupled to the robot arm and configured to detect a held state of the to-be-held object held by the first holder while the robot arm is transferring the to-be-held object, as described above. This ensures that a held state of the to-be-held object is detected during the robot arm's operation of transferring the to-be-held object. This eliminates the need for deactivating the robot arm in order to detect a held state of the to-be-held object, and shortens the time period for the process of picking the to-be-held object.

According to another aspect of the present invention, a robot system includes a robot apparatus and a control apparatus. The robot apparatus includes a robot arm and a held-state detector. The robot arm includes a holder configured to hold a to-be-held object. The held-state detector is coupled to the robot arm and is configured to detect a held state of the to-be-held object held by the holder while the robot arm is transferring the to-be-held object. The control apparatus is configured to adjust an operation of the robot apparatus based on the detected held state of the to-be-held object.

The robot system according to this another aspect of the present invention includes a held-state detector coupled to the robot arm and configured to detect a held state of the to-be-held object held by the holder while the robot arm is transferring the to-be-held object, as described above. This ensures that a held state of the to-be-held object is detected during the robot arm's operation of transferring the to-be-held object. This eliminates the need for deactivating the robot arm in order to detect a held state of the to-be-held object, and ensures a robot system with a shortened time period for the process of picking the to-be-held object.

According to the other aspect of the present invention, a method for producing a to-be-processed material includes holding the to-be-processed material using a holder disposed on a robot arm. A held state of the to-be-processed material held by the holder is detected using a held-state detector disposed on the robot arm while the to-be-processed material held by the holder is being transferred to a next process using the robot arm. The to-be-processed material is subjected to predetermined processing in the next process.

The method for producing a to-be-processed material according to the other aspect of the present invention includes detecting a held state of the to-be-processed material held by the holder using a held-state detector disposed on the robot arm while the robot arm is transferring the to-be-processed material held by the holder to the next process, as described above. This ensures that a held state of the to-be-processed material is detected during the robot arm's operation of transferring the to-be-processed material. This eliminates the need for deactivating the robot arm in order to detect a held state of the to-be-processed material, and ensures a method for producing a to-be-processed material with a shortened time period for the process of picking the to-be-processed material.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a side view of the entire robot system according to a first embodiment of the present invention;
FIG. 2 is a plan view of the entire robot system according to the first embodiment of the present invention;
FIG. 3 is a front view of a sensor unit of the robot system according to the first embodiment of the present invention;
FIG. 4 is a perspective view of a workpiece held by a hand of the robot system according to the first embodiment of the present invention;
FIG. 5 is a perspective view of the workpiece shown in FIG. 4 rotated by 180 degrees about a Z-axis;
FIG. 6 is a block diagram of the robot system according to the first embodiment of the present invention;
FIG. 7 is a flowchart describing a control flow of the robot system according to the first embodiment of the present invention;
FIG. 8 illustrates scanning of workpieces by a disposed state detector of the robot system according to the first embodiment of the present invention;
FIG. 9 illustrates a workpiece held by the hand of the robot system according to the first embodiment of the present invention;
FIG. 10 is an enlarged view of the hand shown in FIG. 9 holding the workpiece;
FIG. 11 illustrates a workpiece transferred by a robot arm of the robot system according to the first embodiment of the present invention;
FIG. 12 illustrates a workpiece placed onto a temporary table by the robot arm of the robot system according to the first embodiment of the present invention;
FIG. 13 illustrates the workpiece rotated on the temporary table shown in FIG. 12;
FIG. 14 illustrates a workpiece placed onto a machine in charge of the next process by the robot arm of the robot system according to the first embodiment of the present invention;
FIG. 15 is a plan view of the entire robot system according to a second embodiment of the present invention;
FIG. 16 illustrates a workpiece sucked by a suction device of the robot system according to the second embodiment of the present invention;
FIG. 17 is a flowchart describing a control flow of the robot system according to the second embodiment of the present invention; and
FIG. 18 illustrates a workpiece in a modification of the present invention.

### DESCRIPTION OF THE EMBODIMENTS

The embodiments will now be described with reference to the accompanying drawings, wherein like reference numerals designate corresponding or identical elements throughout the various drawings.

### First Embodiment

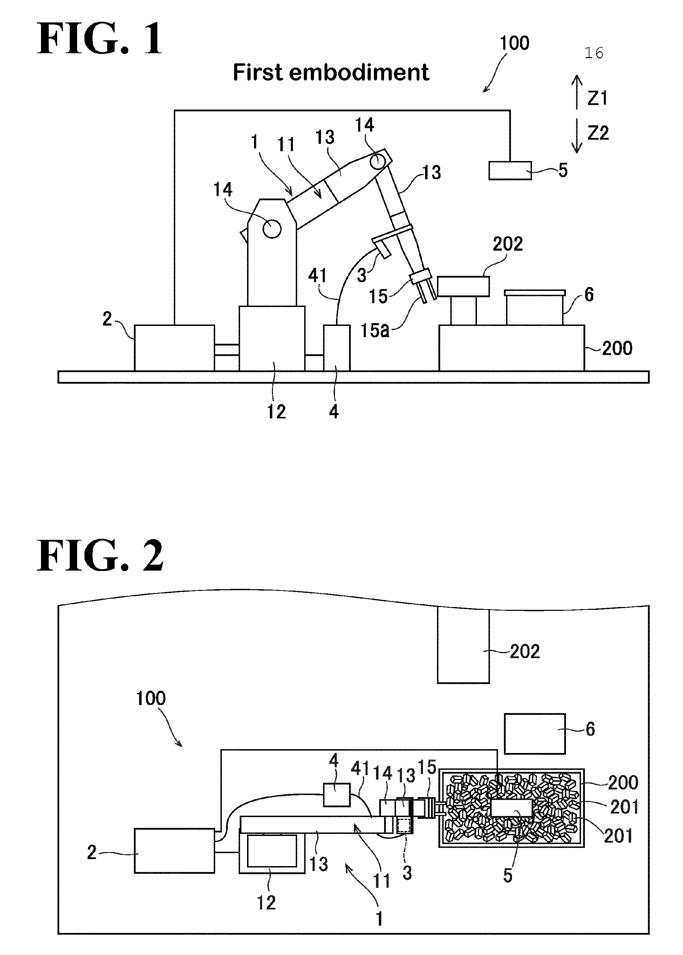

Referring to FIGs. 1 to 6, a robot system 100 according to a first embodiment will be described.

As shown in FIG. 1, the robot system 100 includes a robot 1, a robot controller 2, an image processing system 4, a disposed state detector 5, and a temporary table 6. The robot controller 2 controls overall operation of the robot system 100. The image processing system 4 processes images picked up by a held-state detection camera 3. The disposed state detector 5 detects disposed states of a plurality of workpieces 201 (see FIG. 2) disposed in a stocker 200. The temporary table 6 is where a workpiece 201 is temporarily placed. The robot controller 2 corresponds to the "controller" and the "control apparatus" recited in the accompanying claims. The held-state detection camera 3 corresponds to the "held-state detector" and the "imaging device" recited in the accompanying claims. The image processing system 4 corresponds to the "held-state detector" recited in the accompanying claims. The temporary table 6 corresponds to the "table" recited in the accompanying claims. The stocker 200 corresponds to the "container" recited in the accompanying claims. The workpiece 201 corresponds to the "to-be-held object" and the "to-be-processed material" recited in the accompanying claims.

As shown in FIGs. 1 and 2, a machine 202 in charge of the next process (for example, a processor) is disposed adjacent the robot system 100. The stocker 200, containing the plurality of workpieces 201, is also disposed adjacent the robot system 100.

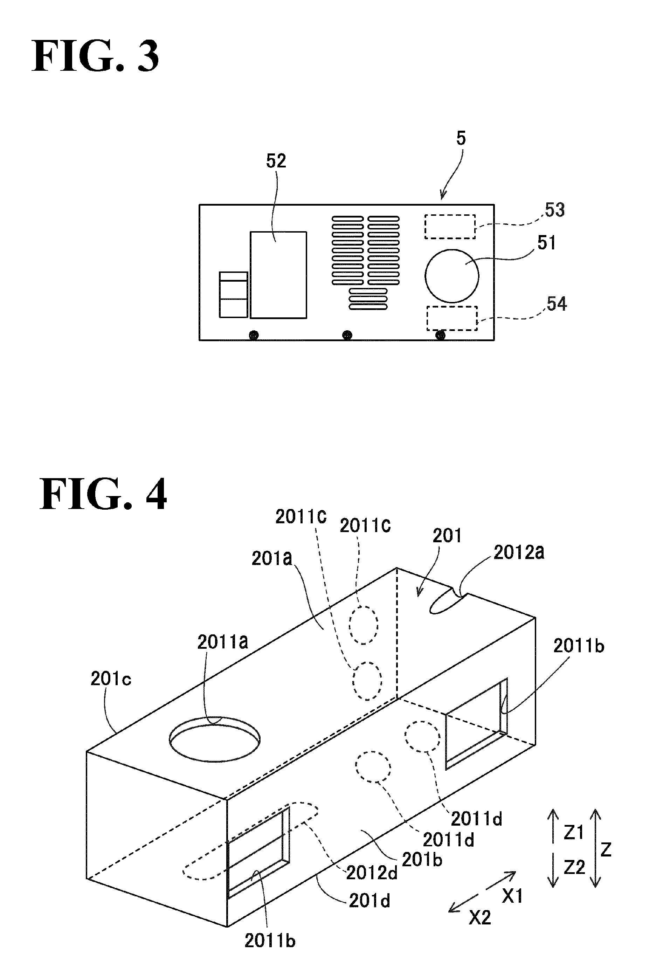

The stocker 200 is made of metal or resin, and as shown in FIG. 2, the plurality of workpieces 201 are disposed in the stocker 200 in a random manner (in bulk). As shown in FIG. 4, each workpiece 201 is in the form of a hollow box of an approximately rectangular parallelepiped profile. The workpiece 201 has four surfaces oriented in the longitudinal directions (arrow X1 direction and arrow X2 direction), namely, a surface 201a, a surface 201b, a surface 201c, and a surface 201d. On the surface 201a, a circular hole 2011a and a cut 2012a are formed. On the surface 201b, two rectangular holes 2011b are formed. On the surface 201c, two circular holes 2011c are formed. On the surface 201d, two circular holes 2011d and one elliptic hole 2012d are formed.

As shown in FIG. 1, the robot 1 is a multi-articular robot including a robot arm 11. The robot arm 11 includes a base 12, a plurality of arm parts 13, and a plurality of joints 14 coupling the arm parts 13 to each other. The robot arm 11 includes therein a servo motor (not shown) to drive the joints 14. Driving of the robot arm 11 (servo motor) is controlled by the robot controller 2.

At a distal end of the robot arm 11, a hand (gripper) 15 is disposed to grip (hold) a workpiece 201. The hand 15 includes a pair of fingers 15a. The pair of fingers 15a are driven by an actuator (not shown) to diminish and enlarge the distance between the pair of fingers 15a. The pair of fingers 15a are controlled by the robot controller 2. The hand 15 corresponds to the "first holder" and the "holder" recited in the accompanying claims.

In the first embodiment, the held-state detection camera 3 is disposed at the arm part 13 on the distal end side of the robot arm 11. The held-state detection camera 3 detects (picks up an image of) a held state of the workpiece 201 held by the hand 15 while the robot arm 11 is transferring the workpiece 201. The held-state detection camera 3 picks up two-dimensional images of the workpiece 201. The held-state detection camera 3 is coupled with the image processing system 4 through a cable 41. The image processing system 4 processes the images picked up (photographed) by the held-state detection camera 3. The held-state detection camera 3 and the image processing system 4 detect the held state of the workpiece 201 held by the hand 15 after the hand 15 holds the workpiece 201 and before the robot arm 11 finishes transfer of the workpiece 201 to the machine 202 in charge of the next process (or after the hand 15 holds the workpiece 201 and before the robot arm 11 passes the temporary table 6). That is, a held state of the workpiece 201 is detected while the robot arm 11 is transferring the workpiece 201. How the image processing system 4 detects a held state of the workpiece 201 held by the hand 15 will be described later.

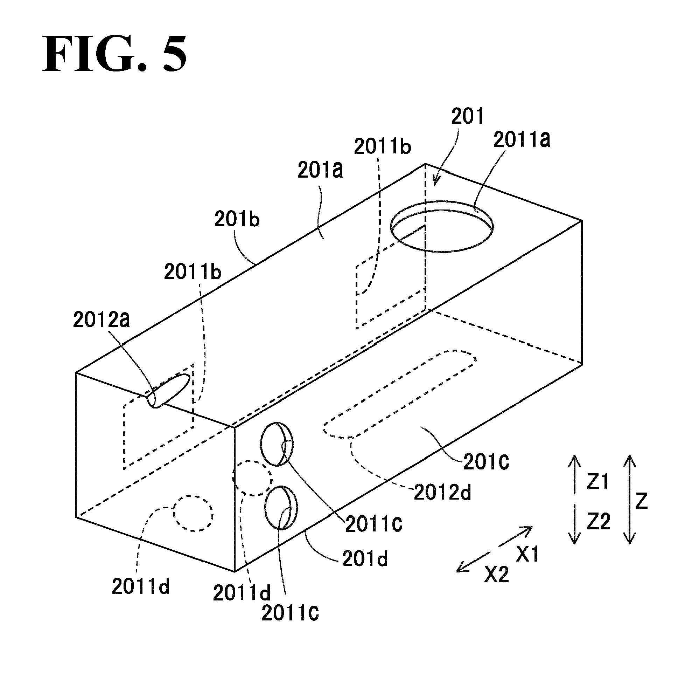

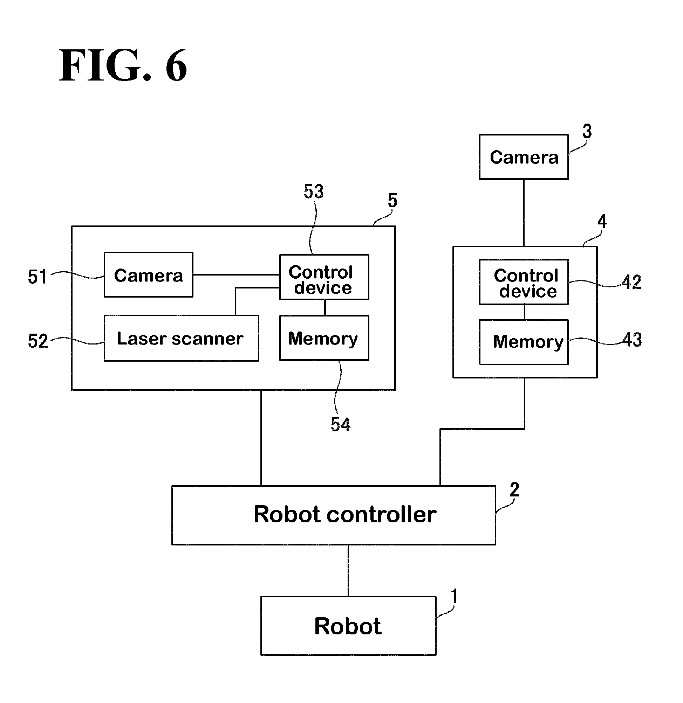

As shown in FIG. 6, the image processing system 4 includes a control device 42 and a memory 43. The image processing system 4 is coupled to the robot controller 2. The memory 43 stores in advance images of the surfaces of the workpiece 201. Specifically, as shown in FIG. 4, the memory 43 stores in advance an image of the surface 201a with the hole 2011a and the cut 2012a disposed on the arrow X1 direction side of the surface 201a, an image of the surface 201b with a hole 2011b, an image of the surface 201c with a hole 2011c, and an image of the surface 201d with a hole 2011d and a hole 2012d. As shown in FIG. 5, the memory 43 also stores in advance an image of the surface 201a with the hole 2011a and the cut 2012a disposed on the arrow X2 direction side of the surface 201a, an image of the surface 201b with the hole 2011b, an image of the surface 201c with the hole 2011c, and an image of the surface 201d with the hole 2011d and the hole 2012d. That is, there is a relation of mirror symmetry between the image of the surface 201a (of the surface 201b, of the surface 201c, or of the surface 201d) shown in FIG. 4, where the cut 2012a is disposed on the arrow X1 direction side, and the image of the surface 201a (of the surface 201b, of the surface 201c, or of the surface 201d) shown in FIG. 5, where the cut 2012a is disposed on the arrow X2 direction side. Thus, the memory 43 stores in advance a total of eight kinds of surface images. When the held-state detection camera 3 picks up an image of the workpiece 201 held by the hand 15, the image processing system 4 compares this image with the eight kinds of images of the workpiece 201 stored in advance in the memory 43, and selects one image (surface) of the eight kinds of images of the workpiece 201 that is highest in correlation with the picked up image.

The control device 42 of the image processing system 4 determines a held state of the workpiece 201 as being the state in which the selected image (surface) is oriented upward (in the arrow Z1 direction). The image processing system 4 further compares the selected image (surface) of the workpiece 201 with the image of the workpiece 201 picked up by the held-state detection camera 3 while the workpiece 201 is held by the hand 15. (Specifically, for example, the image processing system 4 compares the length in the long axis direction of the selected image (surface) of the workpiece 201 with the length in the long axis direction of the image of the workpiece 201 picked up by the held-state detection camera 3.) In this manner, the image processing system 4 determines which portion of the workpiece 201 (such as on an end and in the middle) the hand 15 is gripping.

As shown in FIGs. 1 and 6, the robot controller 2 is coupled to the robot 1 and the image processing system 4. In the first embodiment, simultaneously with controlling the robot arm 11 to transfer the workpiece 201, the robot controller 2 controls the held-state detection camera 3 to execute the operation of detecting (picking up an image of) a held state of the workpiece 201 held by the hand 15. Based on the held state (held portion) of the workpiece 201 detected by the image processing system 4, the robot controller 2 adjusts the operation of the robot arm 11. Also based on the held state (held portion) of the workpiece 201 detected by the image processing system 4, the robot controller 2 controls the robot arm 11 to selectively move to the machine 202 or to the temporary table 6. Specifically, when the held state of the workpiece 201 detected by the image processing system 4 is determined as being a held state in which the workpiece 201 is not able to be placed onto the machine 202 (see FIG. 1) in a desired state, the robot controller 2 controls the robot arm 11 to place the workpiece 201 onto the temporary table 6 and to re-hold the workpiece 201 on the temporary table 6. When the held state of the workpiece 201 detected by the image processing system 4 is determined as being a held state in which the workpiece 201 is able to be placed in a desired state on the machine 202 in charge of the next process, the robot controller 2 controls the robot arm 11 to transfer the workpiece 201 to the machine 202 without re-holding the workpiece 201. When transferring the workpiece 201 to the machine 202 without re-holding the workpiece 201, the robot controller 2 controls the robot arm 11 to adjust its coordinate position relative to the machine 202 based on the detected held state (held portion) of the workpiece 201.

As shown in FIG. 1, the disposed state detector 5 is disposed above (on the arrow Z1 direction side of) the stocker 200. As shown in FIGs. 3 and 6, the disposed state detector 5 includes a camera 51, a laser scanner 52, a control device 53, and a memory 54. The disposed state detector 5 has the camera 51 and the laser scanner 52 oriented downward (in the arrow Z2 direction as seen in FIG. 1). The laser scanner 52 includes a laser light source (not shown), a mirror (not shown), and a motor (not shown). The laser light source generates slit light. The motor drives the mirror. The laser light source irradiates the mirror with slit laser light while the mirror is rotated by the motor, thereby irradiating (scanning) the workpieces 201 with slit laser light. The laser light radiated to the workpieces 201 is reflected to become reflected light, which is imaged by the camera 51. The distance between the disposed state detector 5 and each of the workpieces 201 (three-dimensional shape information of the workpieces 201 in the stocker 200) is detected using a principle of triangulation based on the rotational angle of the motor, the position of the image pick-up device of the camera 51, and a positional relationship among the laser light source, the mirror, and the camera.

Based on the detected distance to each of the workpieces 201, the disposed state detector 5 detects disposed states of the plurality of workpieces 201 disposed in the stocker 200. Specifically, the memory 54 of the disposed state detector 5 stores in advance three-dimensional shape information of the workpieces 201. The disposed state detector 5 compares the three-dimensional shape information of the workpieces 201 stored in advance in the memory 54 with the detected three-dimensional shape information of the workpieces 201 disposed in the stocker 200. In this manner, the disposed state detector 5 detects a disposed state (such as position and posture) of each of the workpieces 201. In the first embodiment, based on the disposed state information of the workpieces 201 detected by the disposed state detector 5 (the three-dimensional shape information of the workpieces 201 disposed in the stocker 200), the robot controller 2 controls the hand 15 to hold one workpiece 201 (for example, a workpiece 201 disposed at an easy-to-hold position) among the plurality of workpieces 201 disposed in the stocker 200.

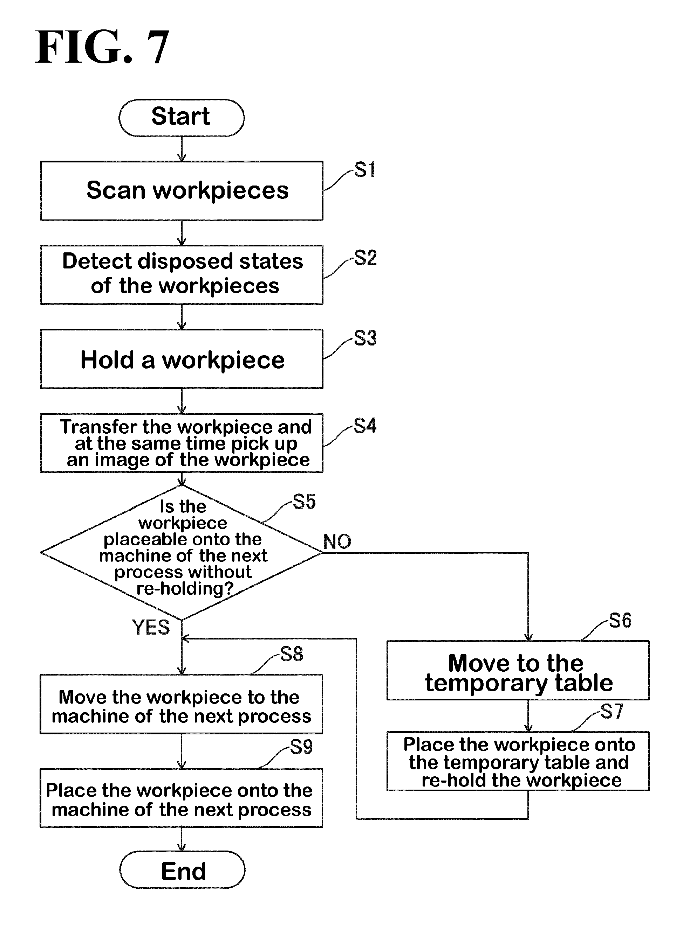

Next, referring to FIGs. 7 to 14, an operation of the robot system 100 according to the first embodiment will be described.

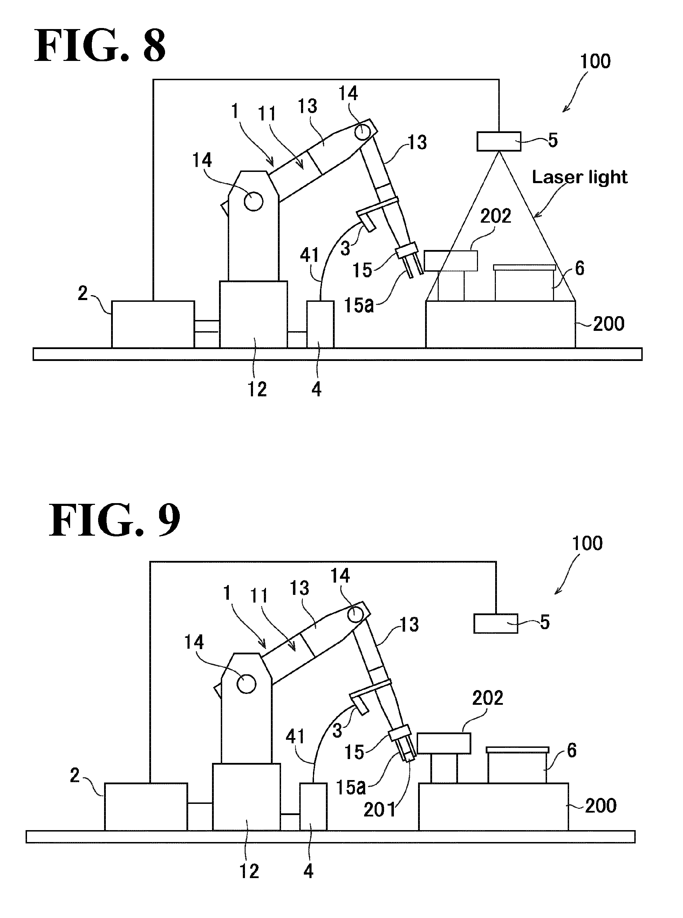

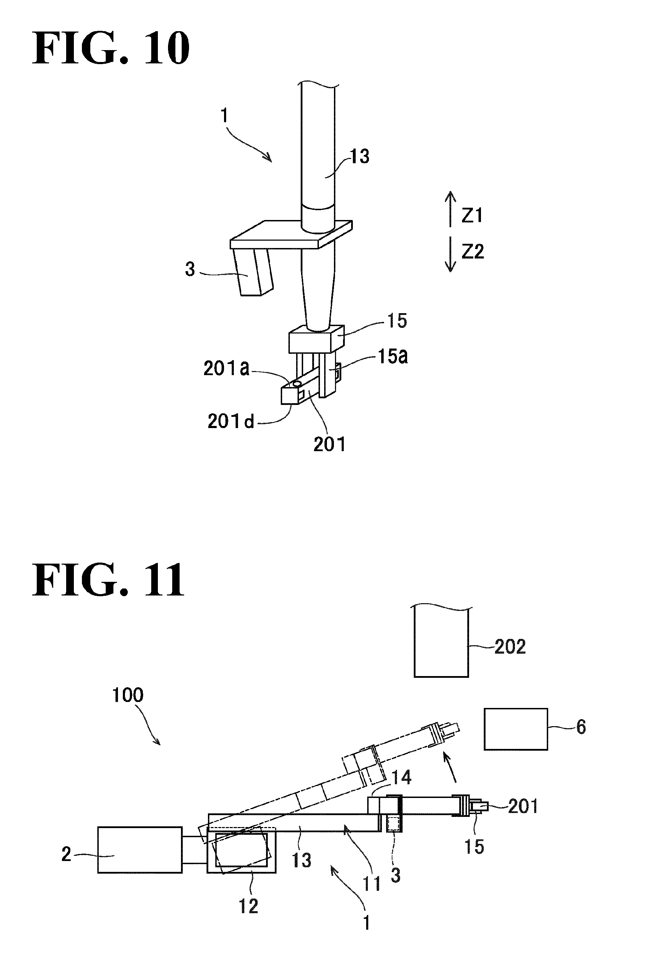

First, at step S1 shown in FIG. 7, the disposed state detector 5 above (on the arrow Z1 direction side of) the stocker 200 radiates laser light to scan the bulk of workpieces 201 in the stocker 200, as shown in FIG. 8. At step S2, the disposed state detector 5 detects the distance between the disposed state detector 5 and each of the workpieces 201 (the three-dimensional shape information of the workpieces 201 disposed in the stocker 200). Next, at step S3, based on the detected disposed state information of the workpieces 201 (the three-dimensional shape information of the workpieces 201 disposed in the stocker 200), the hand 15 holds one workpiece 201 among the plurality of workpieces 201 disposed in the stocker 200, as shown in FIGs. 9 and 10.

Next, at step S4, while the robot arm 11 is transferring the workpiece 201, the held-state detection camera 3 disposed on the robot arm 11 picks up an image of the workpiece 201 held by the hand 15. Then, the image processing system 4 compares the image of the workpiece 201 picked up by the held-state detection camera 3 with the eight kinds of surface images of the workpiece 201 stored in advance in the memory 43 of the image processing system 4. Thus, the image processing system 4 detects a held state of the workpiece 201. As shown in FIG. 11, the held-state detection camera 3 and the image processing system 4 detect the held state of the workpiece 201 after the hand 15 holds the workpiece 201 and before the robot arm 11 finishes transfer of the workpiece 201 to the machine 202 in charge of the next process (or after the hand 15 holds the workpiece 201 and before the robot arm 11 passes the temporary table 6). The image processing system 4 transmits information of the held state of the workpiece 201 to the robot controller 2.

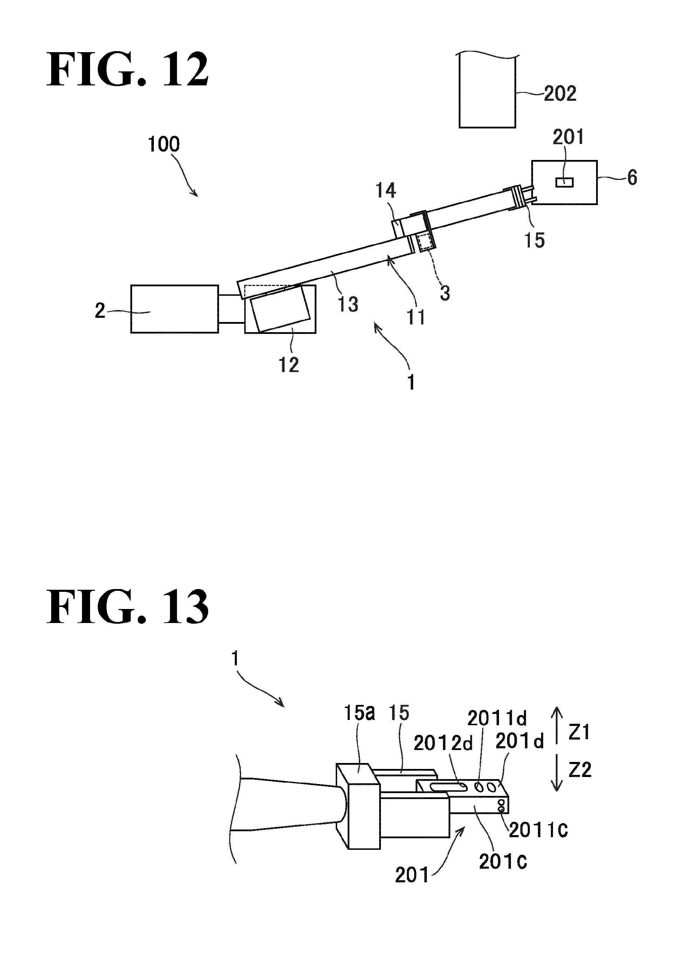

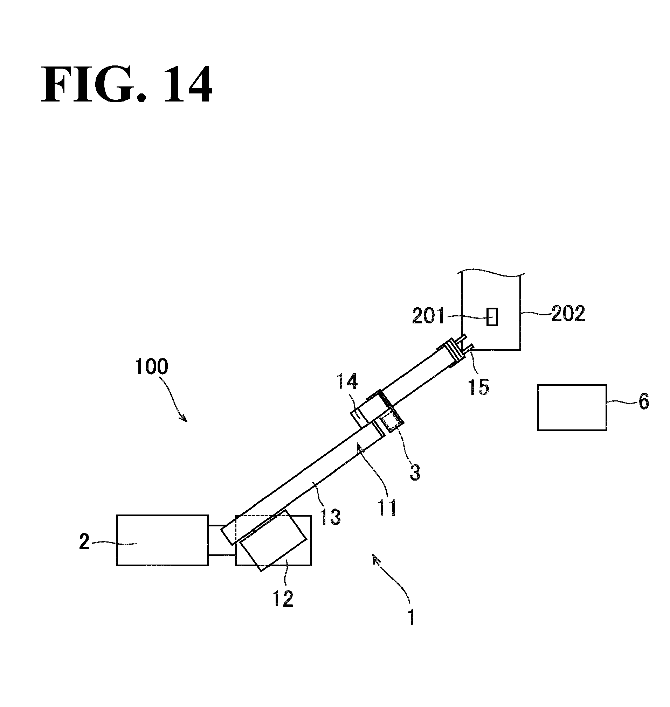

Next, at step S5, the robot controller 2 determines whether the held state of the workpiece 201 detected by the image processing system 4 necessitates re-holding of the workpiece 201 before it is placed onto the machine 202. For example, as shown in FIG. 10, when the workpiece 201 is held by the hand 15 with the surface 201a (the surface with the hole 2011a and the cut 2012a) oriented upward (in the arrow Z1 direction), the workpiece 201 is not able to be placed onto the machine 202 with the surface 201d (the opposite surface of the surface 201a) oriented upward (in the arrow Z1 direction). That is, the workpiece 201 in held state cannot be rotated by 180 degrees about the long axis of the workpiece 201 before being placed onto the machine 202. This is because the robot arm 11 would come into contact with the machine 202. In this case, the robot controller 2 determines that the workpiece 201 needs re-holding, and the process proceeds to step S6. Then, the robot arm 11 is driven to place the workpiece 201 onto the temporary table 6. At step S7, the workpiece 201 is placed onto the temporary table 6, as shown in FIG. 12. Then, as shown in FIG. 13, the hand 15 re-holds the workpiece 201 placed on the temporary table 6. Specifically, the hand 15 rotates the workpiece 201 so that the surface 201d (the surface with the hole 2011d and the hole 2012d) of the workpiece 201 is oriented upward (in the arrow Z1 direction) when placed onto the machine 202. At step S8, the robot arm 11 is driven to place the workpiece 201 onto the machine 202, and at step S9, the workpiece 201 is placed onto the machine 202, as shown in FIG. 14.

When at step S5 the robot controller 2 determines that the held state (held portion) of the workpiece 201 does not necessitate re-holding of the workpiece 201 before it is placed onto the machine 202, the process proceeds to step S8, where the robot arm 11 is driven to place the workpiece 201 onto the machine 202. At step S9, the workpiece 201 is placed onto the machine 202, as shown in FIG. 14. Here, based on the held portion (such as on an end and in the middle) of the workpiece 201, the coordinate position of the robot arm 11 relative to the machine 202 is adjusted. Then, the next process (for example, processing the workpiece 201) is executed on the machine 202.

In the first embodiment, the held-state detection camera 3 (the image processing system 4) is coupled to the robot arm 11 and detects a held state of the workpiece 201 held by the hand 15 while the robot arm 11 is transferring the workpiece 201, as described above. This ensures that a held state of the workpiece 201 is detected during the robot arm 11's operation of transferring the workpiece 201. This eliminates the need for deactivating the robot arm 11 in order to detect a held state of the workpiece 201, and shortens the time period for the process of picking the workpiece 201.

Also in the first embodiment, the held-state detection camera 3 (the image processing system 4) detects the held state of the workpiece 201 after the hand 15 holds the workpiece 201 and while the robot arm 11 is transferring the workpiece 201 to the machine 202 in charge of the next process (that is, simultaneously with the transfer), as described above. This facilitates detection of a held state of the workpiece 201 held by the hand 15.

Also in the first embodiment, the held-state detection camera 3 (the image processing system 4) detects a held state of the workpiece 201 associated with the hand 15, and the robot controller 2 adjusts the operation of the robot arm 11 based on the held state detected by the held-state detection camera 3 (the image processing system 4), as described above. This ensures a suitable operation for the robot arm 11 that is based on the held state of the workpiece 201 associated with the hand 15.

Also in the first embodiment, based on the detected held state of the workpiece 201, the robot controller 2 selects between controlling the robot arm 11 to re-hold the workpiece 201 and transfer the workpiece 201 to the machine 202 in charge of the next process, and controlling the robot arm 11 to transfer the workpiece 201 to the machine 202 in charge of the next process without re-holding the workpiece 201. Even when the held state of the workpiece 201 is not suitable for placement onto the machine 202 in charge of the next process, re-holding the workpiece 201 ensures reliable placement of the workpiece 201 onto the machine 202 in charge of the next process.

Also in the first embodiment, when transferring the workpiece 201 to the machine 202 in charge of the next process without re-holding the workpiece 201, the robot controller 2 controls the robot arm 11 to adjust its coordinate position relative to the machine 202 in charge of the next process based on the held state (held portion) of the workpiece 201 detected during transfer of the workpiece 201, as described above. This ensures appropriate placement of the workpiece 201 onto the machine 202 in charge of the next process in accordance with the held portion of the workpiece 201.

Also in the first embodiment, when the held state of the workpiece 201 detected during transfer of the workpiece 201 is determined as being a held state in which the workpiece 201 is not able to be placed in a desired state onto the machine 202 in charge of the next process, the robot controller 2 controls the robot arm 11 to place the workpiece 201 onto the temporary table 6 and to re-hold the workpiece 201 on the temporary table 6, as described above. Placing the workpiece 201 onto the temporary table 6 facilitates re-holding of the workpiece 201.

Also in the first embodiment, the disposed state detector 5 detects the distance between the disposed state detector 5 and each of the workpieces 201 so as to detect disposed states of the plurality of workpieces 201 disposed in the stocker 200. Based on detection information from the disposed state detector 5, the robot controller 2 controls the hand 15 to hold one workpiece 201 among the plurality of workpieces 201 disposed in the stocker 200, as described above. This facilitates picking of an easy-to-hold workpiece 201 based on the detection information from the disposed state detector 5.

### Second Embodiment

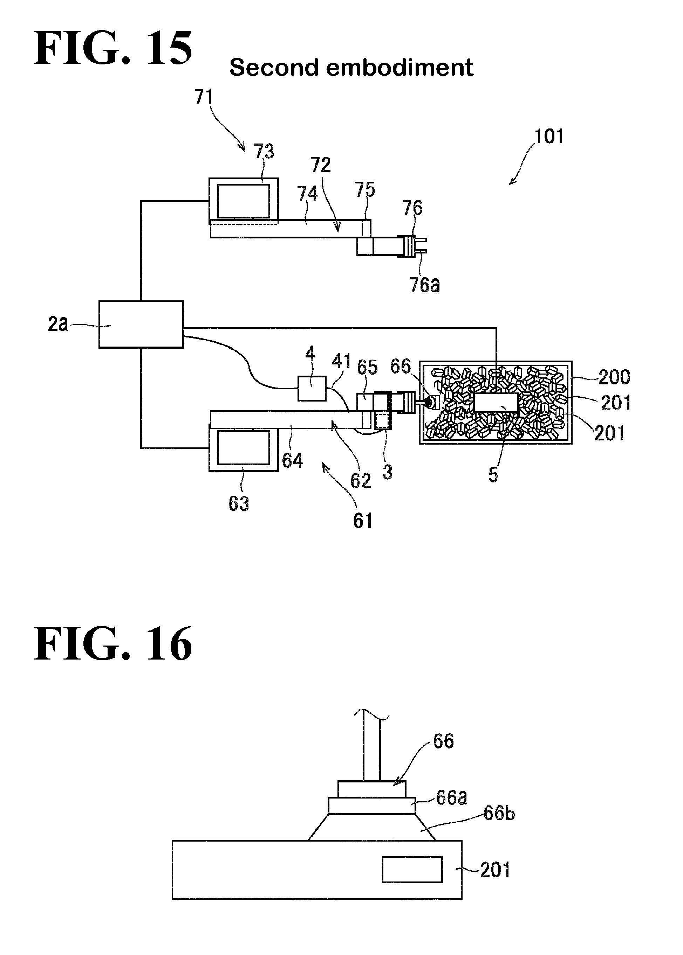

Next, referring to FIGs. 15 and 16, a second embodiment will be described. In the second embodiment, a robot system 101 includes two robots 61 and 71, as opposed to the robot system 100 according to the first embodiment including the single robot 1.

As shown in FIG. 15, the two robots 61 and 71 are adjacent to one another in the robot system 101 according to the second embodiment. The robot 61 is a multi-articular robot including a robot arm 62. The robot arm 62 includes a base 63, a plurality of arm parts 64, and a joint 65 coupling the arm parts 64 to each other. Driving of the robot 61 (the robot arm 62) is controlled by a robot controller 2a. The robot arm 62 is driven to follow operations taught in advance by a teaching device (not shown). The robot arm 62 corresponds to the "first robot arm" recited in the accompanying claims. The robot controller 2a corresponds to the "controller" and the "control apparatus" recited in the accompanying claims.

As shown in FIG. 16, in the second embodiment, a suction device 66 is disposed at a distal end of the robot arm 62, as opposed to the robot arm 11 of the first embodiment (see FIG. 1). The suction device 66 holds the workpiece 201 by suction. The suction device 66 includes a bellows portion 66a and a sucker 66b. The held-state detection camera 3 is disposed on the robot arm 62 to detect (pick up an image of) a held state of the workpiece 201 held by the suction device 66 while the robot arm 62 is transferring the workpiece 201. The suction device 66 corresponds to the "first holder" and the "holder" recited in the accompanying claims.

The robot 71 is a multi-articular robot including a robot arm 72. The robot arm 72 includes a base 73, a plurality of arm parts 74, and a joint 75 coupling the arm parts 74 to each other. Driving of the robot 71 is controlled by the robot controller 2a. The robot arm 72 corresponds to the "second robot arm" recited in the accompanying claims.

At a distal end of the robot arm 72, a hand 76 is disposed to grip (hold) a workpiece 201, similarly to the robot arm 11 of the first embodiment (see FIG. 1). The hand 76 has a function of receiving the workpiece 201 held by the robot arm 62. The hand 76 includes a pair of fingers 76a. Driving of the pair of fingers 76a is controlled by the robot controller 2a. That is, the robot controller 2a controls driving of both the robot arm 62 and the robot arm 72. In the second embodiment, when the workpiece 201 is forwarded from the robot arm 62 to the robot arm 72, the robot controller 2a controls the robot arm 72 to adjust its coordinate position relative to the robot arm 62 based on the detected held state of the workpiece 201. That is, the robot arm 72 is driven based on the detected held state of the workpiece 201, as opposed to the robot arm 62, which follows operations taught in advance by the teaching device. The hand 76 corresponds to the "second holder" and the "gripper" recited in the accompanying claims.

The second embodiment is otherwise similar to the first embodiment.

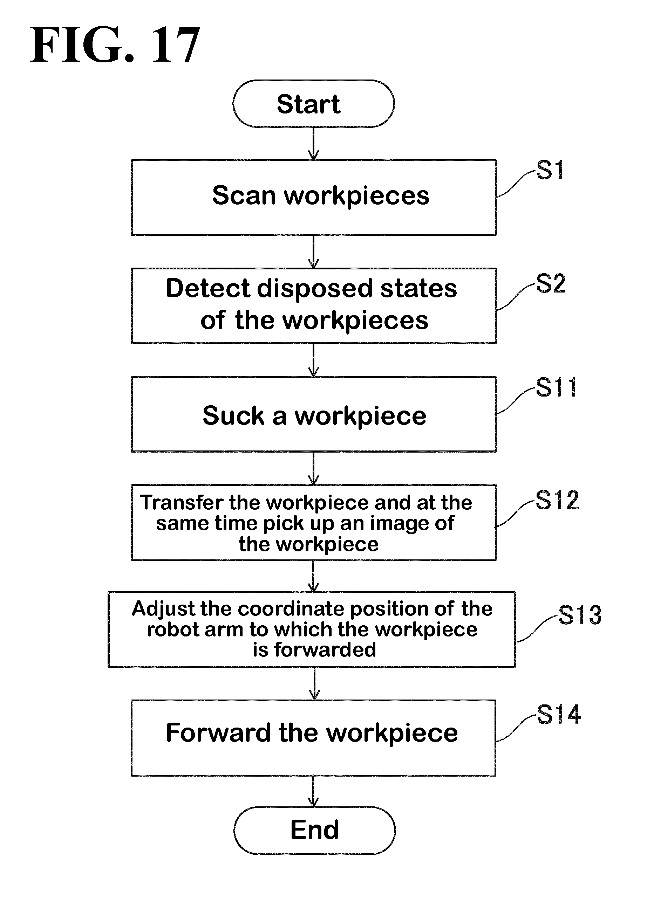

Next, referring to FIG. 17, an operation of the robot system 101 according to the second embodiment will be described.

Step S1 (scanning of the workpieces 201) and step S2 (detection of a disposed state of a workpiece 201) shown in FIG. 17 are similar to those in the first embodiment. At step S11, based on the detected disposed state information of the workpieces 201 (the three-dimensional shape information of the workpieces 201 disposed in the stocker 200), the suction device 66 of the robot arm 62 sucks one workpiece 201 among the plurality of workpieces 201 disposed in the stocker 200.

Next, at step S12, while the robot arm 62 is transferring the workpiece 201, the held-state detection camera 3 disposed on the robot arm 62 picks up an image of the workpiece 201 held by the suction device 66. Then, the image processing system 4 compares the image of the workpiece 201 picked up by the held-state detection camera 3 with the eight kinds of surface images of the workpiece 201 stored in advance in the memory 43 of the image processing system 4. In this manner, the held-state detection camera 3 and the image processing system 4 detect a held state (held portion) of the workpiece 201. The image processing system 4 transmits information of the held state of the workpiece 201 to the robot controller 2a. The image processing system 4 detects the held state of the workpiece 201 after the suction device 66 holds the workpiece 201 and before the robot arm 62 transfers the workpiece 201 to a predetermined position between the robot arm 62 and the robot arm 72. The robot arm 62's operation of transferring the workpiece 201 to the predetermined position is taught in advance by the teaching device (not shown).

Next, at step S 13, based on the detected held state (held portion) of the workpiece 201, the robot controller 2a controls the robot arm 72 to adjust its coordinate position relative to the robot arm 62. Specifically, the robot arm 72 adjusts its coordinate position to a position easier for the hand 76 of the robot arm 72 to grip the workpiece 201. Then, at step S 14, the workpiece 201 is forwarded from the robot arm 62 to the robot arm 72.

As described above, the second embodiment includes the robot arm 62 and the robot arm 72. The robot arm 62 is coupled with the held-state detection camera 3 and holds a workpiece 201 disposed in the stocker 200. The robot arm 72 includes the hand 76 to receive the workpiece 201 held by the robot arm 62 at a predetermined transfer position. When the workpiece 201 is forwarded from the robot arm 62 to the robot arm 72, the robot controller 2a controls the robot arm 72 to adjust its coordinate position relative to the robot arm 62 based on the detected held state of the workpiece 201. Adjusting the coordinate position of the robot arm 72 relative to the robot arm 62 based on the held state of the workpiece 201 ensures that the hand 76 of the robot arm 72 holds the workpiece 201 in a suitable state (for example, a state suitable for placement onto the machine in charge of the next process).

Also in the second embodiment, the robot arm 62 includes the suction device 66 to hold a workpiece 201 out of the stocker 200 by suction, as described above. This ensures a smooth grasp of the workpiece 201 even when the workpiece 201 has a shape that is difficult to grip with a gripper (hand) or other gripping mechanism or when the workpieces 201 are arranged too densely to insert the hand of the gripper. The robot arm 72 uses the hand 76 to receive the workpiece 201 from the robot arm 62. The hand 76 grips the workpiece 201 held by the suction device 66 of the robot arm 62. This enables the robot arm 72 to reliably receive the workpiece 201 from the suction device 66 of the robot arm 62.

Obviously, numerous modifications and variations of the present invention are possible in light of the above teachings. It is therefore to be understood that within the scope of the appended claims, the invention may be practiced otherwise than as specifically described herein.

For example, in the first embodiment, after the hand holds a workpiece, a held state of the workpiece is detected while the robot arm is transferring the workpiece to the machine in charge of the next process. In the second embodiment, after the suction device holds the workpiece, a held state of the workpiece is detected while the robot arm is transferring the workpiece to another robot arm to which the workpiece is intended to be forwarded. These embodiments, however, should not be construed in a limiting sense. The situation in which a held state of the workpiece is detected will not be limited to transfer of the workpiece to the machine in charge of the next process or forwarding of the workpiece to another robot arm. Any other situations are possible insofar as the detection takes place while the robot arm is transferring the workpiece.

While in the first and second embodiments the held-state detection camera and the image processing system have been illustrated as detecting a held state of the workpiece, this should not be construed in a limiting sense. For example, using an image of the workpiece picked up by the held-state detection camera, the control device of the robot controller may detect a held state of the workpiece.

While in the first and second embodiments the held-state detection camera and the image processing system have been illustrated as separate elements, this should not be construed in a limiting sense. For example, the held-state detection camera may accommodate the image processing system.

In the first and second embodiments, the held-state detection camera has been illustrated as picking up a two-dimensional image of the workpiece so as to detect a held state of the workpiece. This, however, should not be construed in a limiting sense. For example, the held-state detector disposed on the robot arm may have a similar configuration to the disposed state detector (the camera 51, the laser scanner 52, the control device 53, and the memory 54), which detects the distance between the disposed state detector and each of the workpieces. In this case, the held-state detector may pick up an image of the distance (a three-dimensional shape of the workpiece) between the held-state detector and the workpiece, thereby detecting a held state of the workpiece. It is also possible to replace the held-state detection camera with a light shielding sensor to detect a held state of the workpiece by determining whether light incident on the light shielding sensor is shielded by the workpiece.

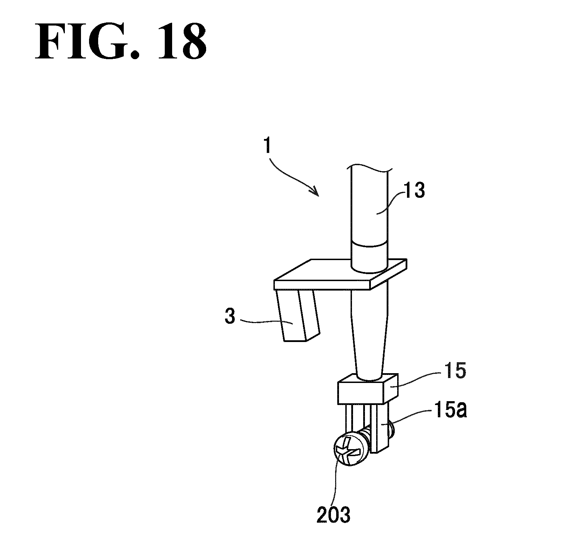

While in the first and second embodiments the stocker has been illustrated as accommodating workpieces of approximately rectangular parallelepiped shape, this should not be construed in a limiting sense. For example, the workpieces accommodated in the stocker may be screws 203, and the hand may hold a screw 203 among the screws 203, as shown in FIG. 18. Other examples than the screws 203 include bar-shaped workpieces, and the hand may hold one out of the bar-shaped workpieces.

In the first embodiment, the control of re-holding the workpiece is executed when the held state of the workpiece is determined as being a held state in which the workpiece is not able to be placed in a desired state onto the machine in charge of the next process. This, however, should not be construed in a limiting sense. For example, it may be when the workpiece is determined as being in an unstable held state that the workpiece is controlled to be re-held.

In the first embodiment, the control of placing the workpiece onto the temporary table and re-holding the workpiece on the temporary table is executed when the held state of the workpiece is determined as being a held state in which the workpiece is not able to be placed in a desired state onto the machine in charge of the next process. This, however, should not be construed in a limiting sense. Other examples include control of placing the workpiece at a position other than the temporary table (for example, placing the workpiece back into the stocker) and re-holding the workpiece at the position. Other examples include control of placing the workpiece onto a separate reversal machine and reversing the orientation of the workpiece on the reversal machine.

While in the second embodiment the robot arm 62 has been illustrated as including the suction device 66, this should not be construed in a limiting sense. For example, the robot arm 62 may include a hand instead of the suction device 66.

In the second embodiment, the robot arm 62 is driven to follow operations taught in advance by a teaching device, while the robot arm 72 is driven in accordance with a held state of the workpiece. This, however, should not be construed in a limiting sense. For example, the robot arm 62 may be driven in accordance with a held state of the workpiece, while the robot arm 72 may be driven to follow operations taught in advance by the teaching device. It is also possible to drive both the robot arm 62 and the robot arm 72 in accordance with a held state of the workpiece.

- 2, 2a: Robot controller (controller, control apparatus)
- 3: Held-state detection camera (held-state detector, imaging device)
- 4: Image processing system (held-state detector)
- 5: Disposed state detector
- 6: Temporary table (table)
- 11: Robot arm
- 15: Hand (first holder, holder)
- 62: Robot arm (first robot arm)
- 66: Suction device (first holder, holder)
- 72: Robot arm (second robot arm)
- 76: Hand (second holder, gripper)
- 100, 101: Robot system
- 200: Stocker (container)
- 201: Workpiece (to-be-held object, to-be-processed material)
- 203: Screw (to-be-held object)

## Claims

1. A robot apparatus, **characterized by**:
a robot arm comprising a first holder configured to hold a to-be-held object; and
a held-state detector coupled to the robot arm and configured to detect a held state of the to-be-held object held by the first holder while the robot arm is transferring the to-be-held object.

2. The robot apparatus according to claim 1, further comprising a controller configured to control driving of the robot arm and the first holder, the controller being configured to control the held-state detector to detect the held state of the to-be-held object after the first holder holds the to-be-held object and simultaneously with transfer of the to-be-held object by the robot arm to a predetermined transfer position.

3. The robot apparatus according to claim 2, wherein the controller is configured to adjust an operation of the robot arm based on the held state of the to-be-held object detected by the held-state detector.

4. The robot apparatus according to claim 3,
wherein the held-state detector comprises an imaging device configured to pick up an image of the held state of the to-be-held object, and
wherein the controller is configured to adjust the operation of the robot arm based on the image of the held state of the to-be-held object picked up by the imaging device.

5. The robot apparatus according to claim 3 or 4,
wherein the held-state detector is configured to detect a held portion of the to-be-held object held by the first holder, and
wherein the controller is configured to adjust the operation of the robot arm based on the held portion detected by the held-state detector.

6. The robot apparatus according to claim 3 or 4,
wherein the robot arm further comprises
a first robot arm to which the held-state detector is coupled, the first robot being configured to hold the to-be-held object, where the to-be-held object is disposed in a container, and
a second robot arm comprising a second holder configured to receive, at the predetermined transfer position, the to-be-held object held by the first robot arm, and
wherein when the to-be-held object is forwarded from the first robot arm to the second robot arm, the controller is configured to adjust a coordinate position of at least one of the first robot arm and the second robot arm based on the detected held state of the to-be-held object.

7. The robot apparatus according to claim 6,
wherein the first robot arm comprises a first holder comprising a suction device configured to pick the to-be-held object out of the container by suction, and
wherein the second robot arm comprises a second holder comprising a gripper configured to grip the to-be-held object held by the first robot arm so as to receive the to-be-held object from the first holder of the first robot arm.

8. The robot apparatus according to claim 3 or 4, wherein based on the detected held state of the to-be-held object, the controller is configured to select between controlling the robot arm to re-hold the to-be-held object and transfer the to-be-held object to the predetermined transfer position, and controlling the robot arm to transfer the to-be-held object to the predetermined transfer position without re-holding the to-be-held object.

9. The robot apparatus according to claim 8, wherein when the to-be-held object is transferred to the predetermined transfer position without being re-held, the controller is configured to control the robot arm to adjust a coordinate position of the robot arm relative to the predetermined transfer position based on the held state of the to-be-held object detected during transfer of the to-be-held object.

10. The robot apparatus according to claim 8 or 9, wherein when the detected held state of the to-be-held object is determined as being a held state in which the to-be-held object is not able to be disposed at the predetermined transfer position in a desired state, the controller is configured to control the robot arm to re-hold the to-be-held object and transfer the to-be-held object to the predetermined transfer position.

11. The robot apparatus according to claim 10, wherein when the held state of the to-be-held object detected during transfer of the to-be-held object is determined as being a held state in which the to-be-held object is not able to be disposed at the predetermined transfer position in a desired state, the controller is configured to control the robot arm to place the to-be-held object onto a table and to re-hold the to-be-held object on the table.

12. The robot apparatus according to any one of claims 2, 3, 4, 7, 9, and 11, further comprising a disposed state detector configured to detect a distance between the disposed state detector and each of a plurality of to-be-held objects disposed in a container so as to detect a disposed state of each of the plurality of to-be-held objects disposed in the container,
wherein the controller is configured to control the first holder to hold one to-be-held object among the plurality of to-be-held objects disposed in the container based on detection information from the disposed state detector.

13. A robot system, **characterized by**:
a robot apparatus according to any of the claims 1 to 12; and
a control apparatus configured to adjust an operation of the robot apparatus based on the detected held state of the to-be-held object.

14. A method for producing a to-be-processed material, **characterized by**:
holding the to-be-processed material using a holder disposed on a robot arm;
detecting a held state of the to-be-processed material held by the holder using a held-state detector disposed on the robot arm while transferring the to-be-processed material held by the holder to a next process using the robot arm; and
subjecting the to-be-processed material to predetermined processing in the next process.
